# EUROPÄISCHE PATENTSCHRIFT

(11) **EP 3 127 688 B1**
(45) Veröffentlichungstag und Bekanntmachung des Hinweises auf die Patenterteilung: **28.04.2021**
(21) Anmeldenummer: 16158518.7
(22) Anmeldetag: 03.03.2016
(51) Int. Cl.: B30B 9/24, F26B 17/02, F26B 7/00, C10F 5/04, B30B 15/34, F26B 5/14

(54) **VORRICHTUNG UND VERFAHREN ZUR ENTWÄSSERUNG VON WASSER ENTHALTENDEM GUT**
DEVICE AND METHOD FOR DEHYDRATION OF MATERIAL CONTAINING WATER
DISPOSITIF ET PROCEDE DE DRAINAGE D'UNE MATIERE CONTENANT DE L'EAU

(30) Priorität: 01.08.2015 DE 102015010056
(43) Veröffentlichungstag der Anmeldung: 08.02.2017
(73) Patentinhaber: Siempelkamp Maschinen- und Anlagenbau GmbH, 47803 Krefeld (DE)
(72) Erfinder: Aumüller, Steffen Dipl.-Ing., 41464 Neuss (DE)
(74) Vertreter: von dem Borne, Andreas

(56) Entgegenhaltungen:
- EP-A1- 1 236 552
- WO-A1-96/10064
- DE-A1- 2 436 290
- DE-B4- 19 537 286
- US-A1- 2002 152 630

## Beschreibung

Die Erfindung betrifft eine Vorrichtung zur Entwässerung von Wasser enthaltendem Gut mittels Druck und Wärme mit
a) einer Einrichtung zur dosierten Abgabe des Guts,
b) einem Übergabeabschnitt, in dem das Gut von einer Transporteinrichtung oder direkt in eine Doppelbandpresse überführbar ist, und
c) einer Doppelbandpresse mit
   - einem Pressenunterteil und einem Pressenoberteil,
   - im Pressenunterteil und Pressenoberteil endlos in einer Umlaufrichtung umlaufenden Stahlpressbändern
   - im Pressenunterteil und im Pressenoberteil jeweils wenigstens einer beheizbaren Pressplatte und- im Pressenunterteil und/oder im Pressenoberteil wenigstens einem Aktuator, mit dem Druck über wenigstens eine Heizplatte und ein Stahlpressband auf das Gut ausübbar ist.

Die Erfindung betrifft ferner ein Verfahren zur Entwässerung von Wasser enthaltendem Gut mit der genannten Vorrichtung.

Unter dem Wasser enthaltendem Gut werden in dieser Erfindung in erster Linie Kohle, insbesondere Braunkohle, oder Schlamm verstanden. Allerdings soll die Erfindung weitere der Entwässerung zugängliche Güter nicht ausschließen.

Die Energiegewinnung durch Braunkohle ist ein gängiges Verfahren. Dabei macht der Feuchtigkeitsgehalt der Kohle den Prozess ineffizienter je höher er ist. Es gibt verschiedene Verfahren, die Feuchtigkeit in der Braunkohle oder im Klärschlamm mit Verpressen oder Erwärmung zu reduzieren.

Als Einrichtung zur dosierten Abgabe des Guts auf eine Transporteinrichtung ist beispielsweise eine Einrichtung gemäß der DE 10016944 A1 bekannt.

Die DE-PS 472419 beschreibt bereits eine Presse, die zur Entwässerung von stark wasserhaltigen vegetabilischen und mineralischen Stoffen dient. Sie besitzt zwei keilförmig aufeinander zulaufende endlose Bänder mit aufgesetzten durchlässigen Wänden, die hintereinander geschaltete Pressräume entstehen lassen. Eine derartige Vorrichtung ist sehr aufwändig und nur für geringe Geschwindigkeiten und niedrige Drücke geeignet.

Aus der DE 19535315 A1 und der DE 19537286 B4 sind Taktpressen bekannt, die quasikontinuierlich arbeiten können. Aufgrund des geschlossenen Pressraums kann Braunkohle oder Schlamm mit zugeführtem Dampf erhitzt werden. Mit einer solchen Anlage sind geschätzt 25 Tonnen Braunkohle pro Stunde auf den gewünschten Feuchtigkeitsgehalt zu entwässern. Bedenkt man dabei, dass ein 1GW-Block eines Kohlekraftwerks heutzutage über 800 Tonnen Kohle pro Stunde benötigt, so versteht man leicht, dass der Durchsatz nur mit einer großen Zahl an Pressen, wie in der DE 19535315 A1 beschrieben, möglich wäre. In der Veröffentlichung sind übrigens beiläufig als Stand der Technik auch Doppelbandpressen, insbesondere die genannte DE-PS 472419 erwähnt

EP1236552 A1 offenbart ein Verfahren gemäss dem Oberbegriff des Anspruchs 1.

Es ist demnach die Aufgabe der Erfindung eine Vorrichtung zur Entwässerung und ein Verfahren zur Entwässerung mit dieser Vorrichtung zu schaffen, die einen deutlich höheren Durchsatz an Wasser enthaltendem Gut, insbesondere Kohle oder Schlamm, erlaubt.

Die Aufgabe wird hinsichtlich des Verfahrens durch die Merkmale des Anspruchs 1 erfüllt. Die Aufgabe wird hinsichtlich 2. der Vorrichtung durch die Merkmale des Anspruchs 4 erfüllt.

Insbesondere ist die Vorrichtung dadurch gekennzeichnet, dass die Doppelbandpresse im Betriebszustand zumindest einen in Förderrichtung ersten Heizabschnitt mit Drücken auf das Gut unter 4 MPa und Heizplattenoberflächentemperaturen oberhalb von 160 °C und zumindest einen zweiten Entwässerungsabschnitt mit Drücken auf das Gut oberhalb 4 MPa aufweist. Dabei ist eine weitere Beheizung des Gutes innerhalb des Entwässerungsabschnitts zumeist nicht mehr notwendig.

Man verteilt also erfindungsgemäß zwei Prozesse, die bislang in einer Pressstation zeitlich hintereinander stattgefunden haben, auf zwei Abschnitte einer Doppelbandpresse. Dadurch wird ein kontinuierlicher Entwässerungsprozess realisiert, so dass sich die Durchsatzmenge des Gutes deutlich vergrößert. Die Doppelbandpresse benötigt in Folge zwar eine Länge von 70 und mehr Metern, jedoch ist der Bau einer solchen Doppelbandpresse immer noch deutlich wirtschaftlicher als stattdessen mehrere Taktpressen einsetzen zu müssen. Dabei besitzt der Heizabschnitt gegenüber dem Entwässerungsabschnitt in der Regel die etwas größere Länge. In ihm wird das Gut über hochbeheizte Platten, zwischen denen das Gut transportiert wird, aufgeheizt. In diesem Abschnitt hält sich ein Verdampfungsprozess in Grenzen. Das in Poren eingeschlossene Wasser wird erwärmt und verändert seine Stoffeigenschaften, beispielsweise sinken die Viskosität und die Oberflächenspannung. In den Feststoffen kommt es durch die hohen Temperaturen zu Aufschmelzungen. Sobald das Gut in den Entwässerungsabschnitt, in dem ein sehr hoher Druck herrscht, überführt wird, kann das Wasser innerhalb des Gutes durch hohen Druck ausgetrieben und flüssig, teilweise auch noch in Form von Dampf, abgeführt werden. Das Gut wird verdichtet und verlässt die Doppelbandpresse plattenförmig.

Erfindungsgemäss sind zumindest im Entwässerungsabschnitt wenigstens sektionsweise zwischen den Stahlpressbändern wirkende Absaugvorrichtungen für aus dem Gut ausgetretenen Wasser und/oder Dampf vorgesehen.

Die ausgepresste Flüssigkeit und der entstandene Dampf können in dem abgeschlossenen Raum zwischen den undurchlässigen Stahlbändern besonders leicht abgesaugt werden. In der Regel wird die Absaugvorrichtung dazu seitlich der Doppelbandpresse angeordnet, so dass die Absaugöffnungen auf den Spalt zwischen den Stahlpressbändern gerichtet sind. Die Absaugvorrichtung sollte ausgelegt sein auf etwa 0,2 bis 0,6 bar Unterdruck gegenüber der Umgebungsatmosphäre und ein Absaugvolumen von bis zu 200.000 m³/h. Damit wird verhindert, dass sich Feuchtigkeit in der Halle zur Entwässerung niederschlägt und ggf. Maschinenteile angreift. Außerdem sorgt die Absaugvorrichtung für eine Verbesserung des Klimas. Das abgesaugte Kondensat kann im Übrigen in Wärmetauschern energetisch weiter genutzt werden.

Vorzugsweise weisen die Absaugvorrichtungen seitliche Saugöffnungen auf, die gegenüber den Stahlbändern abgedichtet sind.

Da leichte Verluste durch Undichtigkeiten keine wesentliche Rolle spielen, genügt eine relativ einfache Dichtung an der Absaugöffnung, die gegenüber dem umlaufenden Stahlpressband durch geringen Anpressdruck auch nur minimale Verschleißerscheinungen zeigt. Eventuell kann sie von dem Stahlpressband sogar leicht beabstandet sein und somit keinem Verschleiß unterliegen.

Bevorzugt läuft wenigstens ein Stahlpressband gemeinsam mit einem dem Gut zugewandten Membranband um.

Das Membranband lässt insbesondere im Entwässerungsabschnitt Wasser und Dampf aus dem Gut in Richtung Stahlpressband durchtreten und hält Feststoffe zurück. Durch die Trennung von flüssigem bzw. gasförmigem Wasser von den Feststoffen kann das Gut leichter entwässert werden und ist für die spätere Verbrennung besser geeignet.

Mit Vorteil ist vorgesehen, dass das Membranband aus einem Gewebe oder gelochtem Band besteht, das eine Maschenweite von 0,1 bis 20 µm aufweist. Derartige Gewebe können aus Metall oder Kunstfasern bestehen. Als gelochte Bänder werden metallische Stoffe bevorzugt. Die Maschenweite wird den entsprechenden Gegebenheiten, insbesondere dem Gut angepasst, so dass sich eine umgekehrte Osmose ergibt. Bei einer geeigneten Maschenweite ist es sogar möglich, zu erreichen, dass das Wasser im Heizabschnitt A kaum, im Entwässerungsabschnitt aber problemlos durch die Membran tritt. Um die Funktion der Membran stets zu gewährleisten sind im Rücklauf des Membranbandes Reinigungsvorrichtungen vorgesehen.

Erfindungsgemäss ist zwischen dem Stahlpressband und dem Membranband ein Siebband angeordnet.

Das Siebband mit größeren Öffnungen als denen des Membranbandes schafft einen Freiraum zwischen Membranband und Stahlpressband, in dem der ausgetriebene Dampf bzw. das Wasser Platz finden. Die Absaugung aus dem Bereich wird dadurch erleichtert, wobei die Druckübertragung nicht in Mitleidenschaft gerät. Mit Vorteil können innerhalb des Siebbandes auch Kanäle vorgesehen sein, über die Dampf bzw. Wasser zum Rand des Stahlpressbandes geleitet werden können.

In einer vorteilhaften Ausgestaltung sind das Membranband und das Siebband miteinander verbunden.

Unterschiedliches seitliches Verlaufen und Reibung dieser beiden Bänder werden dadurch vermieden.

Das die Aufgabe lösende Verfahren weist als kennzeichnende Merkmale auf, dass das Gut in einem in Förderrichtung ersten Heizabschnitt der Doppelbandpresse mit Drücken auf das Gut unter 4 MPa und Heizplattenoberflächentemperaturen oberhalb von 160 °C auf mindestens 130°C erwärmt wird und zumindest in einem zweiten Entwässerungsabschnitt der Presse mit Drücken auf das Gut oberhalb 4 MPa entwässert wird.

Innerhalb des Heizabschnitts wird das Wasser in dem Gut aufgewärmt und verändert wie bereits beschrieben seine Stoffeigenschaften. Mit dem Übergang in den Entwässerungsabschnitt lässt sich das erwärmte Gut wesentlich leichter Auspressen, so dass Wasser in meist flüssiger Form entweicht und abgesaugt werden kann. Das Gut verliert auf diese Weise mehr als die Hälfte seiner Feuchtigkeit, gemessen in Gewichtsprozenten.

Mit Vorteil kann das Wasser und/oder der Dampf an wenigstens einem Rand wenigstens eines Stahlpressbandes abgesaugt werden. Damit wird der Verdichtungsprozess in der Doppelbandpresse nicht gestört. In versuchen haben im Heizabschnitt Drücke unter 4 MPa ausgereicht, während im Entwässerungsabschnitt sich Drücke in einer Größenordnung von nahezu 6 MPa als besonders wirkungsvoll herausgestellt haben.

Bevorzugt wird zumindest im Entwässerungsabschnitt Wasser und/oder Dampf durch ein für Feststoffe undurchlässiges Membranband gepresst. Durch die Trennung von flüssigem bzw. gasförmigem Wasser von den Feststoffen kann das Gut, wie bereits in der Offenbarung der Vorrichtung beschrieben, leichter entwässert werden.

Die Erfindung wird im Folgenden anhand von Ausführungsbeispielen unter Bezugnahme auf die Zeichnungen näher erläutert. In diesen zeigen
- Figur 1: eine Seitenansicht einer erfindungsgemäßen Vorrichtung,
- Figur 2: einen schematischen Querschnitt durch die erfindungsgemäße Vorrichtung und
- Figur 3: eine Detailansicht der Ausgestaltung des Entwässerungsabschnitts der erfindungsgemäßen Vorrichtung im Schnitt.

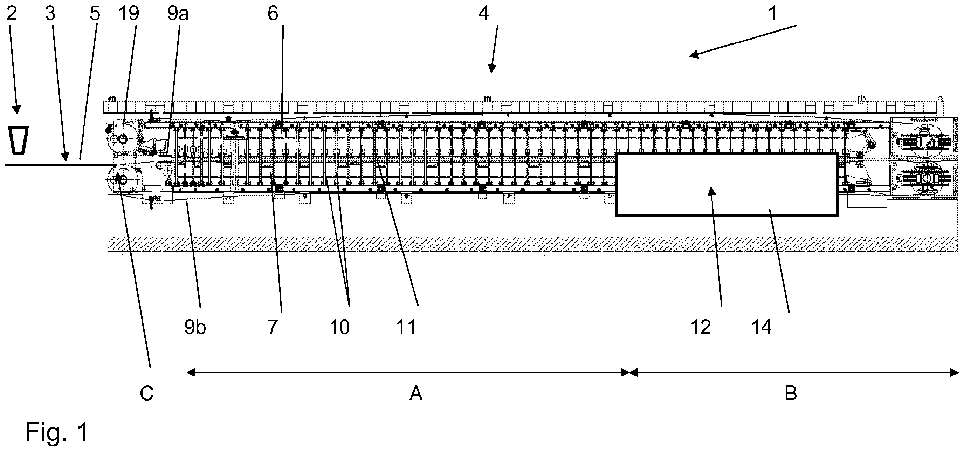

Figur 1 zeigt die erfindungsgemäße Vorrichtung zur Entwässerung 1. Zu Beginn der Behandlung wird das Gut 5 über eine Einrichtung zur dosierten Abgabe 2 auf eine Transporteinrichtung 3 gestreut. Diese beiden Einrichtungen sind nur schematisch angedeutet, weil sie dem eigentlichen Entwässerungsprozess nur vorgeschaltet sind. Es handelt sich in der Regel um einen Vorratsbunker mit einem regelbaren Öffnungsventil und Streuverteiler als Einrichtung zur dosierten Abgabe 2 und ein Förderband als Transporteinrichtung 3. Auf diese Weise wird ein "Teppich" oder eine "Matte" des zu entwässernden Gutes 5 in die Doppelbandpresse 4 geleitet und in dem mit dem Bezugszeichen C versehenen Abschnitt übergeben.

Die Doppelbandpresse besteht aus einem Pressenoberteil 6 und einem Pressenunterteil 7, die von zahlreichen Rahmen 10 gestützt sind. Sowohl im Pressenoberteil 6 als auch im Pressenunterteil 7 gibt es ein um Umlenkwalzen 19 umlaufendes wasser- und dampfundurchlässiges Stahlpressband 9a, 9b. Zwischen den Stahlpressbändern 9a, 9b kann das Gut mit Druck belastet werden. Vom Gut 5 aus gesehen jenseits des Stahlpressbandes 9a, 9b, innerhalb seines Umlaufs befindet sich jeweils sowohl im Pressenoberteil 6 als auch im Pressenunterteil 7 wenigstens eine beheizbare Platte 8a, 8b. Um die Reibung zwischen dem Stahlpressband 9a, 9b und der Heizplatte 8a, 8b zu verringern sind ebenfalls umlaufende Rollkörper 20a, 20b vorgesehen.

Mittels wenigstens eines Aktuators 11 kann - sich am Rahmen oder dem Fundament abstützend - Kraft auf wenigstens eine beheizbare Platte 8a, 8b und somit auf das Gut 5 aufgebracht werden. Die beheizbaren Platten geben ihre Wärme ebenfalls an das Stahlpressband 9a, 9b ab und können auf diese Weise das Gut erwärmen. Die beheizbaren Platten können dabei beispielsweise in nicht dargestellter Weise über durch Kanäle geführte Wärmeträgermedien, elektrisch oder mittels Induktion beheizt werden.

Die Doppelbandpresse ist in zwei Abschnitte, gekennzeichnet durch die Bezugszeichen A und B, aufgeteilt. Im Abschnitt A, dem Heizabschnitt, wird das Gut bei niedrigem Druck auf eine hohe Temperatur gebracht. Auch im Inneren des Guts befindliches Wasser wird zumindest nahe seines Verdampfungszustandes gebracht. Dazu ist vorgesehen, die Heizplattenoberflächen wenigstens einer beheizbaren Platte 8a, 8b auf über 160°C zu erwärmen und den Druck unter 4 MPa zu halten. Die Wärme der beheizbaren Platten wird über Strahlung, Konvektion und Wärmeleitung über die zwischen beheizbarer Platte 8a, 8b und Stahlpressband 9a, 9b angeordneten Rollkörper 20a, 20b an das Stahlpressband 9a, 9b übertragen. Um eine zur Aufheizung des Gutes 5 notwendige Wärmemenge übertragen zu können, hat sich eine Mindestoberflächentemperatur an der beheizbaren Platte 8a, 8b von 160°C ermitteln lassen.

Das erwärmte Gut gelangt schließlich in den Abschnitt B, den Entwässerungsabschnitt. Hier wird der Druck deutlich auf über 4 MPa, vorzugsweise annähernd 6 MPa erhöht. Der größte Teil des Wassers wird hier unter dem hohen Druck aus dem Gut ausgetrieben und seitlich der Doppelbandpresse zusammen mit entstehendem Dampf nach außen geleitet. Um das Wasser bzw. den Dampf abzuführen, sind seitlich des Entwässerungsabschnitts B der Doppelbandpresse 4 Absaugvorrichtungen 12 vorgesehen. Hierbei handelt es sich in der Regel um Kästen mit Saugöffnungen 13 im Bereich zwischen den Stahlpressbändern 9a, 9b und Ableitkanälen 14.

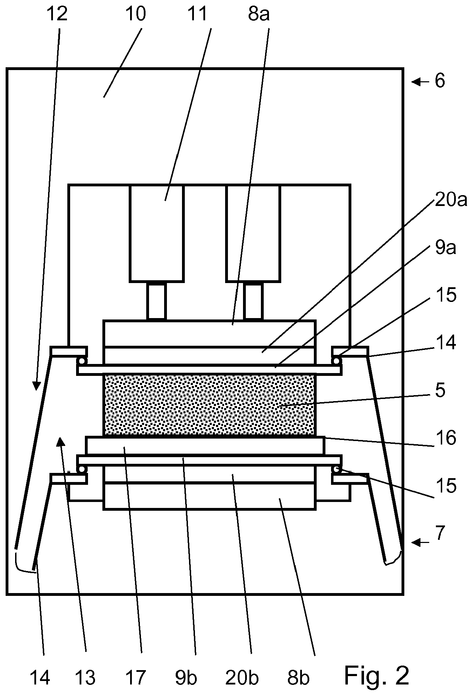

Dies wird deutlicher in Fig. 2 dargestellt. Fig. 2 zeigt einen schematischen Teilquerschnitt durch den Entwässerungsabschnitt B der Doppelbandpresse 4. Man erkennt einen rechteckförmigen Rahmen 10 mit einem Ausschnitt. Am oberen Querträger stützen sich zwei Aktuatoren 11 ab, in der Regel Hydraulikzylinder. Die Anzahl der Aktuatoren variiert selbstverständlich in Abhängigkeit von der Breite der Doppelbandpresse 4 und dem zu entwässernden Gut 5. Die Aktuatoren 11 leiten ihre Kraft in die obere beheizbare Platte 8a und können sie nach unten drücken. Widerlager ist die untere beheizbare Platte 8b, die sich am unteren Rahmenteil abstützt. Sowohl im Pressenoberteil 6 als auch im Pressenunterteil 7 sind zudem umlaufende Stahlpressbänder 9a und 9b vorgesehen, zwischen denen das Gut 5 gepresst wird. Der Rücklauf der Stahlpressbänder 9a, 9b (beispielsweise ober- und unterhalb des Rahmens 10) ist in Fig. 2 nicht dargestellt. Auch die Zuläufe des Heizmediums zu den beheizbaren Platten 8a, 8b sind aus Gründen der Übersichtlichkeit nicht dargestellt.

Auf beiden Seiten befinden sich Absaugvorrichtungen 12 mit jeweils einer Saugöffnung 13 und einem Ableitkanal 14 für Dampf und Wasser. Im Ableitkanal herrscht dabei ein Unterdruck durch einen nicht dargestellten Absaugventilator in Höhe von 0,2 bis 0,6 bar. Die Saugöffnung ist durch eine gleitende oder berührungslose Dichtung 15 zu den beiden Stahlpressbändern 9a, 9b hin abgedichtet.

Gemeinsam mit dem unteren Stahlpressband 9b laufen ein Membranband 16 und, falls notwendig, auch noch ein Siebband 17 mit um. Membranband 16 und Siebband 17 können dabei eine Baueinheit bilden.

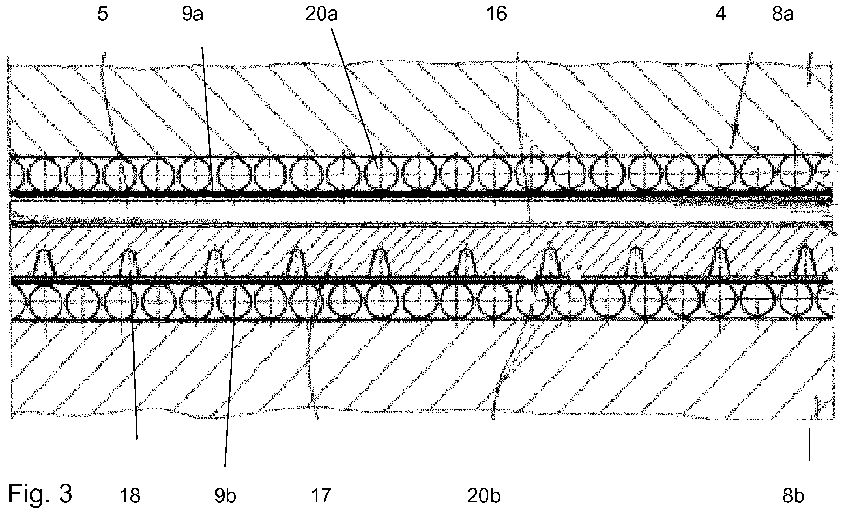

In Fig. 3 werden die Bänder noch einmal vergrößert in der geschnittenen Seitenansicht dargestellt. Die Figur wird oben und unten durch die abgeschnittenen beheizbaren Platten 8a und 8b begrenzt. Auf ihnen laufen die Rollkörper 20a und 20b mit etwa der halben Geschwindigkeit der Stahlpressbänder 9a und 9b mit. Das obere Stahlpressband 9a drückt unmittelbar auf das Gut 5. Zwischen dem Gut 5 und dem unteren Stahlpressband 9b sind noch das besagte Membranband 16 und ein Siebband 17 vorgesehen. Das Membranband 16 besteht aus einem Gewebe oder gelochtem Band. Die Durchlässe im Membranband 16 und im Siebband 17 sind nicht dargestellt. Aber für das Membranband sind Maschenweiten von 0,1 bis 20 µm vorgesehen, je nach Art des Gutes 5. Diese Öffnungsgröße der Membranporen erlaubt den Durchtritt von Wasser und Dampf, aber im Wesentlichen nicht den von Feststoffen. Das in diesem Ausführungsbeispiel zusätzlich vorgesehene Siebband hat größere Öffnungsweiten der Durchlässe. Diese sind so bemessen, dass sie bei der Druckgebung im Entwässerungsabschnitt ausreichend Wasser und Dampf aufnehmen können. Zusätzlich können Abführkanäle 18 vorgesehen sein, die den Austrag seitlich zu den Absaugvorrichtungen 12 leiten.

## Patentansprüche

1. Verfahren zur Entwässerung von Feuchtigkeit enthaltendem Gut (5) mittels Druck und Wärme mit einer Vorrichtung mit
a) einer Einrichtung zur dosierten Abgabe (2) des Guts (5),
b) einem Übergabeabschnitt (C), in dem das Gut (5) von einer Transporteinrichtung (3) oder direkt in eine Doppelbandpresse (4) überführbar ist, und
c) einer Doppelbandpresse (4) mit
- einem Pressenunterteil (7) und einem Pressenoberteil (6),
- im Pressenunterteil (7) und Pressenoberteil (6) endlos in einer Umlaufrichtung umlaufenden Stahlpressbändern (9a, 9b)
- im Pressenunterteil (7) und im Pressenoberteil (6) jeweils wenigstens einer beheizbaren Heizplatte (8a, 8b) und
- im Pressenunterteil (7) und/oder im Pressenoberteil (6) wenigstens einem Aktuator (11), mit dem Druck über wenigstens eine Heizplatte (8a, 8b) und ein Stahlpressband (9a, 9b) auf das Gut (5) ausübbar ist,
**dadurch gekennzeichnet, dass**
das Gut in einem in Förderrichtung ersten Heizabschnitt (A) der Doppelbandpresse mit Drücken auf das Gut (5) unter 4 MPa und Heizplattenoberflächentemperaturen oberhalb von 160 °C auf mindestens 130°C erwärmt wird und zumindest in einem zweiten Entwässerungsabschnitt (B) der Doppelbandpresse (4) mit Drücken auf das Gut (5) oberhalb 4 MPa entwässert wird.

2. Verfahren nach Anspruch 1, **dadurch gekennzeichnet, dass** Wasser und/oder Dampf an wenigstens einem Rand wenigstens eines Stahlpressbandes (9a, 9b) abgesaugt wird

3. Verfahren nach Anspruch 1 oder 2, **dadurch gekennzeichnet, dass** Wasser und/oder Dampf zumindest im Entwässerungsabschnitt (B) durch ein für Feststoffe weitgehend undurchlässiges Membranband (16) gepresst wird.

4. Vorrichtung zur Durchführung eines Verfahrens gemäß einem der Ansprüche 1 bis 3 mit
a) einer Einrichtung zur dosierten Abgabe (2) des Guts (5),
b) einem Übergabeabschnitt (C), in dem das Gut (5) von einer Transporteinrichtung (3) oder direkt in eine Doppelbandpresse (4) überführbar ist, und
c) einer Doppelbandpresse (4) mit
- einem Pressenunterteil (7) und einem Pressenoberteil (6),
- im Pressenunterteil (7) und Pressenoberteil (6) endlos in einer Umlaufrichtung umlaufenden Stahlpressbändern (9a, 9b)
- im Pressenunterteil (7) und im Pressenoberteil (6) jeweils wenigstens einer beheizbaren Heizplatte (8a, 8b) und
- im Pressenunterteil (7) und/oder im Pressenoberteil (6) wenigstens einem Aktuator (11), mit dem Druck über wenigstens eine Heizplatte (8a, 8b) und ein Stahlpressband (9a, 9b) auf das Gut (5) ausübbar ist, wobei die Doppelbandpresse (4) im Betriebszustand zumindest einen in Förderrichtung ersten Heizabschnitt (A), in dem Drücke auf das Gut unter 4 MPa ausübbar sind und die wenigstens eine Heizplatte (8a, 8b) auf eine Heizplattenoberflächentemperaturen oberhalb von 160 °C erwärmbar ist, und zumindest einen zweiten Entwässerungsabschnitt (B), in dem Drücke auf das Gut (5) oberhalb 4 MPa ausübbar sind, aufweist, wobei
zumindest im Entwässerungsabschnitt (B) wenigstens sektionsweise zwischen den Stahlpressbändern (9a, 9b) wirkende Absaugvorrichtungen (12) für aus dem Gut (5) ausgetretenen Dampf und/oder Flüssigkeiten vorgesehen sind, wobei zumindest im Entwässerungsabschnitt (B) wenigstens ein Stahlpressband gemeinsam mit einem dem Gut (5) zugewandten Membranband (16) umläuft und wobei zwischen dem Stahlpressband (9a, 9b) und dem Membranband (16) ein Siebband (17) angeordnet ist.

5. Vorrichtung gemäß Anspruch 4, **dadurch gekennzeichnet, dass** die Absaugvorrichtungen (12) seitliche Saugöffnungen (13) aufweisen, die gegenüber den Stahlpressbändern (9a, 9b) eine Dichtung (15) aufweisen.

6. Vorrichtung gemäß Anspruch 4 oder 5, **dadurch gekennzeichnet, dass** das Membranband (16) aus einem Gewebe oder gelochtem Band besteht, das eine Maschen- bzw. Öffnungsweite von 0,1 bis 20 µm aufweist.

7. Vorrichtung gemäß Anspruch 4 oder 5, **dadurch gekennzeichnet, dass** das Membranband (16) und das Siebband (17) miteinander verbunden sind.

## Claims

1. A method of dewatering material (5) containing moisture by means of pressure and heat using a device comprising
a) a system for the dosed delivery (2) of the material (5),
b) a transfer section (C), into which the material (5) can be transferred from a transporting device (3) or directly into a double-belt press (4), and
c) a double-belt press (4) with
- a lower press section (7) and an upper press section (6),
- steel press belts (9a, 9b) circulating continuously in the direction of rotation in the lower press section (7) and in the upper press section (6),
- at least one heatable heating plate (8a, 8b) in both the upper press section (7) and in the lower press section (6) and
- at least one actuator (11) in the lower press section (7) and/or the upper press section (6) with which pressure is can be exerted on the material (5) via at least one heating plate (8a, 8b) and one steel press belt (9a, 9b),
**characterised in that**
in a first heating section (A) of the double-belt press in the direction of conveying, with pressures on the material (5) of under 4 MPa and heating plate temperatures of above 160 °C, the material is heated to at least 130 °C and at least in a second dewatering section (B) of the double-belt press (4), it is dewatered with pressures on the material (5) of above 4 MPa.

2. The method according to claim 1, **characterised in that** water and/or steam is removed by suction on at least one edge of at least one steel press belt (9a, 9b).

3. The method according to claim 1 or 2, **characterised in that** at least in the dewatering section (B) the water and/or steam is/are pressed through a membrane belt (16) which is largely impermeable to solid materials.

4. A device for implementing a method according to any one of claims 1 to 3 with
a) a system for the dosed delivery (2) of the material (5),
b) a transfer section (C), into which the material (5) can be transferred from a transporting device (3) or directly into a double-belt press (4), and
c) a double-belt press (4) with
- a lower press section (7) and an upper press section (6),
- steel press belts (9a, 9b) circulating continuously in the direction of rotation in the lower press section (7) and in the upper press section (6),
- at least one heatable heating plate (8a, 8b) in both the upper press section (7) and in the lower press section (6) and
- at least one actuator (11) in the lower press section (7) and/or the upper press section (6) with which pressure can be exerted on the material (5) via at least one heating plate (8a, 8b) and one steel press belt (9a, 9b),
wherein
in the operational state, the double-belt press (4) comprises at least one heating section (A) in the direction of conveying, in which pressures of under 4 MPa can be exerted on the material and the at least one heating plate (8a, 8b) is heatable to heating plate surface temperature above 160 °C, and at least one second dewatering section (B), in which pressures of over 4 MPa can be exerted on the material (5), wherein
provided at least in the dewatering section (B), are suction devices (12), acting at least in sections between the steel press belts (9a, 9b), for steam and/or liquids emerging from the material (5), wherein at least in the dewatering section (B) at least one steel press belt circulates together with a membrane belt (16) facing the material (5), and wherein between the steel press belt (9a, 9b) and the membrane belt (16) a sieve belt (17) is arranged.

5. The device according to claim 4, **characterised in that** the suction devices (12) comprise lateral suction openings (13) which have a seal (15) vis-à-vis the steel press belts (9a, 9b).

6. The device according to claim 4 or 5, **characterised in that** the membrane belt (16) is made of a fabric or perforated belt which has a mesh or opening width of 0.1 to 20 µm.

7. The device according to claim 4 or 5, **characterised in that** the membrane belt (16) and the sieve belt (17) are connected to each other.

## Revendications

1. Procédé de déshydratation de matière (5) contenant de l'humidité au moyen de pression et de chaleur avec un dispositif comportant
a) un système de distribution dosée (2) de matière (5),
b) une section de transfert (C) dans laquelle la matière (5) peut être transférée par un système de transport (3) ou directement dans une presse à double bande (4) et
c) une presse à double bande (4) avec
- une partie inférieure de presse (7) et une partie supérieure de presse (6),
- des bandes de presse en acier (9a, 9b) passant en continu dans un sens de circulation dans la partie inférieure de presse (7) et dans la partie supérieure de presse (6),
- éventuellement au moins une plaque chauffante (8a, 8b) pouvant être chauffée dans la partie inférieure de presse (7) et dans la partie supérieure de presse (6) et
- au moins un actionneur (11) dans la parie inférieure de presse (7) et dans la partie supérieure de presse (6) avec lequel de la pression peut être exercée sur la matière (5) par le biais d'au moins une plaque chauffante (8a, 8b) et une bande de presse en acier (9a, 9b),
**caractérisé en ce que**
la matière est chauffée à au moins 130 °C dans une première section de chauffage (A) dans le sens de transport de la presse à double bande avec pression sur la matière (5) en dessous de 4 MPa et à des températures de surface de plaque chauffante au-dessus de 160 °C et est déshydratée au moins dans une deuxième section de déshydratation (B) de la presse à double bande (4) avec une pression sur la matière (5) au-dessus de 4 MPa.

2. Procédé selon la revendication 1, **caractérisé en ce que** l'eau et/ou la vapeur est absorbée sur au moins un bord d'au moins une bande de presse en acier (9a, 9b).

3. Procédé selon la revendication 1 ou 2, **caractérisé en ce que** l'eau et/ou la vapeur est comprimée au moins dans la section de déshydratation (B) par une bande à membrane (16) largement imperméable aux matières solides.

4. Dispositif pour exécuter un procédé selon l'une quelconque des revendications 1 à 3 avec
a) un système de distribution dosée (2) de matière (5),
b) une section de transfert (C) dans laquelle la matière (5) peut être transférée par un système de transport (3) ou directement dans une presse à double bande (4) et
c) une presse à double bande (4) avec
- une partie inférieure de presse (7) et une partie supérieure de presse (6),
- des bandes de presse en acier (9a, 9b) passant en continu dans un sens de circulation dans la partie inférieure de presse (7) et dans la partie supérieure de presse (6),
- éventuellement au moins une plaque chauffante (8a, 8b) pouvant être chauffée dans la partie inférieure de presse (7) et dans la partie supérieure de presse (6) et
- au moins un actionneur (11) dans la parie inférieure de presse (7) et dans la partie supérieure de presse (6) avec lequel de la pression peut être exercée sur la matière (5) par le biais d'au moins une plaque chauffante (8a, 8b) et une bande de presse en acier (9a, 9b),
sachant que
la presse à double bande (4) comporte à l'état de fonctionnement au moins une première section de chauffage (A) dans le sens de transport, dans laquelle des pressions en dessous de 4 MPa peuvent être exercées sur la matière et au moins une plaque chauffante (8a, 8b) peut être chauffée à une température de surface de plaque chauffante au-dessus de 160 °C et au moins une deuxième section de déshydratation (B) dans laquelle des pressions au-dessus de 4 MPa peuvent être exercées sur la matière (5), sachant
qu'au moins dans la section de déshydratation (B) sont prévus des dispositifs d'aspiration (12) agissant au moins par section entre les bandes de presse en acier (9a, 9b) pour la vapeur et/ou les liquides sortant de la matière (5),sachant qu'au moins une bande de presse en acier circule en commun avec une bande à membrane (16) tournée vers la matière (5) au moins dans la section de déshydratation (B) et sachant qu'une bande tamiseuse (17) est disposée entre la bande de presse en acier (9a, 9b) et la bande à membrane (16).

5. Dispositif selon la revendication 4, **caractérisé en ce que** les dispositifs d'aspiration (12) comportent des ouvertures d'aspiration latérales (13), qui comportent un joint d'étanchéité (15) en face des bandes de presse en acier (9a, 9b).

6. Dispositif selon la revendication 4 ou 5, **caractérisé en ce que** la bande à membrane (16) est composée d'un tissu ou d'une bande perforée, qui comporte une largeur de maille ou d'ouverture de 0,1 à 20 µm.

7. Dispositif selon la revendication 4 ou 5, **caractérisé en ce que** la bande à membrane (16) et la bande tamiseuse (17) sont reliées entre elles.
